# EUROPEAN PATENT SPECIFICATION

(11) **EP 2 976 761 B1**
(45) Date of publication and mention of the grant of the patent: **30.05.2018**
(21) Application number: 14770163.5
(22) Date of filing: 17.03.2014
(51) Int. Cl.: G08G 1/0965, B60W 40/068, B60W 30/00, G06K 9/00, G08G 1/16, G08G 1/0967, G08G 1/00, G01N 21/55

(54) **FRICTION MONITORING SYSTEM FOR A VEHICLE AND A METHOD PERTAINING TO SUCH A SYSTEM**
REIBUNGSÜBERWACHUNGSSYSTEM FÜR EIN FAHRZEUG UND VERFAHREN FÜR SOLCH EIN SYSTEM
SYSTÈME DE SURVEILLANCE DE FRICTION POUR UN VÉHICULE ET PROCÉDÉ RELATIF À UN TEL SYSTÈME

(30) Priority: 19.03.2013 SE 1350330
(43) Date of publication of application: 27.01.2016
(73) Proprietor: Scania CV AB, 151 87 Södertälje (SE)
(72) Inventor: ANDERSSON, Jon, SE-144 62 Rönninge (SE); AH-KING, Joseph, SE-151 60 Södertälje (SE); NYSTRÖM, Tom, SE-151 60 Södertälje (SE)
(74) Representative: Scania CV AB
(86) International application number: PCT/SE2014/050320
(87) International publication number: WO 2014/148991

(56) References cited:
- EP-A2- 1 150 266
- EP-A2- 1 150 266
- WO-A2-2012/013553
- US-A- 5 777 451
- US-A1- 2006 293 841
- US-A1- 2006 293 841
- US-A1- 2007 179 681
- US-A1- 2011 187 560
- US-A1- 2012 283 944

## Description

### Field of the invention

The present invention relates to a friction monitoring system for a vehicle and a method pertaining to such a system, according to the preambles of the independent claims.

### Background to the invention

Heavy vehicles may be difficult to operate in slippery conditions. Accordingly, they are often equipped with connectable/disconnectable skid protection systems with, for example, snow chains or sand distributors. These systems may for example be used, when the vehicle has to come to a halt on an icy surface after a long run, by the driver activating the sand distributor so that sand is distributed before the vehicle comes to a halt, in order to prevent its warm tyres from melting in the ice under them a cavity from which it might be difficult to extricate the vehicle.

The driver needs to be aware of when it is important to activate the vehicle's skid protection systems, and must activate them at the right time. Becoming stuck in an icy parking facility with a heavy vehicle combination might be very time-consuming, and even dangerous if the ground slopes.

The specifications mentioned below describe solutions whereby a skid protection system is activated if slipperiness is detected.

EP2402737 describes a device for determining the friction of a roadway by using an optical sensor. A measurement detecting diminished friction leads for example to activation of snowchains or variation of the tractive force on the wheels.

US5010982 describes a skid protection system whereby activation of snowchains or sand distribution is connected to a system for varying the tractive force exerted on the roadway.

DE102009019820 and DE102005008540 describe automatic activation of skid protection systems in the form of sand or friction-raising means.

Automatic activation of skid protection functions on an individual vehicle when a measurement carried out indicates that the roadway is slippery, i.e. when it is detected that the friction is low, is thus known.

US2006/0293841 describes an antispin system for vehicles which limits sliding by reducing the power train torque. It also describes transmission of friction values between vehicles in vehicle trains, e.g. to prompt vehicles behind to activate their antispin systems.

The inventors have found that information about slipperiness may also be used by other vehicles, and the object of the present invention is therefore to make it possible for slipperiness information to be disseminated to other vehicles, e.g. in vehicle trains, and thereby improve traffic safety.

So-called autonomous vehicles have no driver to activate the skid protection functions, and the inventors have further found that this may lead to problems in slippery conditions. A further object of the invention is to improve safety in the context of autonomous vehicles.

### Summary of the invention

The above objects are achieved with the invention defined by the independent claims.

Preferred embodiments are defined by the dependent claims.

According to the invention the friction monitoring system is adapted to detecting the presence of slipperiness and then to communicating this information wirelessly to other vehicles, and to taking nearby vehicles into account when activating the host vehicle's own skid protection system.

In an application in vehicle trains, slipperiness may be detected by a first vehicle in the train, which then communicates this information to other vehicles in the train. Skid protection systems are then activated automatically to raise the friction when the vehicle's sensors detect that this is necessary. If a vehicle train intends to come to halt on a surface which is slippery, the leading vehicles may for example distribute sand for those behind, otherwise it might be very difficult for all of the train's vehicles to move off simultaneously after being stationary in slippery conditions.

In another application the skid protection system is fitted in autonomous vehicles. Autonomous vehicles have no driver to assess whether there is slipperiness, so it is advantageous if there are systems for being able to decide when a skid protection system needs to be activated, not only at the time but also as a precautionary measure.

One embodiment is also concerned with the location of the roadway where slipperiness is detected, i.e. where it is detected that the friction is low. If a lone vehicle passes a slippery stretch of road, information about the slipperiness and its location may be disseminated to other vehicles which will be using the slippery stretch of road.

### Brief description of drawings

Figure 1 is a schematic diagram of the system architecture for different layers of information structures for vehicle trains.
Figure 2 is a block diagram illustrating the present invention.
Figure 3 is a flowchart illustrating the method according to the present invention.
Figure 4 is a flowchart illustrating an embodiment of the method according to the present invention.
Figure 5 is a schematic block diagram illustrating an embodiment of the present invention.

### Detailed description of preferred embodiments of the invention

The friction monitoring system according to the present invention is particularly suitable for use in the context of so-called vehicle trains. A review of vehicle trains is therefore set out below. The invention is also suitable for so-called autonomous vehicles, particularly those in vehicle trains. A general review of autonomous vehicles is therefore also set out below.

The already high traffic density on Europe's major roads is expected to increase still further. The energy required for carrying freight on these roads is also enormous and growing. A possible contribution to solving these problems is to have trucks travel close together in so-called vehicle trains ("platoons"). Travelling close together in a vehicle train considerably lowers the air resistance to trucks, reduces their energy requirements and uses the transport system more efficiently. Vehicle train means here a number of vehicles travelling with close spacing between them and as a unit. Studies have shown that the fuel consumption of the leading vehicle of a train may be reduced by 2-10% and that of the following vehicle by 15-20%, as compared with a lone vehicle. These figures are based on the spacing between the trucks being 8-16 metres and on travelling at 80 km/h. The lower fuel consumption means a corresponding reduction in CO₂ emissions.

These well-known facts are currently already being put to advantage by drivers, with consequently improved traffic safety. A fundamental issue concerning vehicle trains is how to reduce the time gap between vehicles from a recommended 3 seconds to between 0.5 and 1 second without affecting traffic safety.

Driver reaction time can be eliminated by using distance sensors and cameras, a type of technique already employed by systems such as ACC (adaptive cruise control) and LKA (lane keeping assistance). There is however a limitation in that distance sensors and cameras need a clear view of the target, making it difficult to detect what is happening more than a couple of vehicles ahead in the queue. A further limitation is that they cannot react proactively, i.e. react to occurrences which have had no marked effect on the pace of traffic.

A development of IEEE standard 802.11 for WLAN (wireless local area networks) called 802.11p allows wireless transmission of information between vehicles, and between vehicles and infrastructures. Various kinds of information may be sent to and from the vehicles, e.g. vehicle parameters and strategies. A leading vehicle in a vehicle train may thus for example
- send information about its own state, i.e. weight, speed, power output, location, etc.,
- send information about control actions which affect nearby traffic, e.g. braking,
- be proactive for vehicles behind by passing reports about traffic occurrences rearwards in the vehicle train.

This access to information makes it possible to create new functions, e.g. for helping drivers to drive more efficiently and more safely. The development of communication techniques has made it possible to design trucks and infrastructures which support the use of vehicle trains. A vehicle train can operate as a unit, thereby damping fluctuations in the train caused by speed changes and consequently allowing closer spacing and better overall traffic flow.

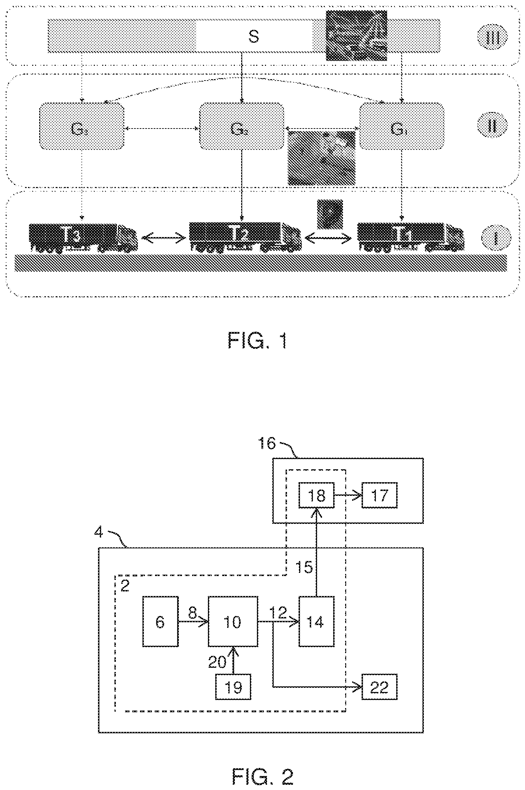

ACC covers only the leading vehicle via information from radar and maintains a distance from that vehicle by a predetermined time gap which is set by the driver. Figure 1 is a schematic diagram of the system architecture for various layers of information structures for a vehicle train which here comprises vehicles T₁, T₂ and T₃. The arrows in the diagram represent applicable communication paths for the structure. ACC appears in Figure 1 in the form of a first communication interface "I". Introducing vehicle-to-vehicle (V2V) communication, which appears in the form of the interface "II" in the diagram, making it possible for information to be exchanged between nearby vehicles. G₁, G₂ and G₃ represent units built into the vehicles and adapted to wirelessly sending and receiving information. A further way of communicating is by vehicle-to-infrastructure (V2I) communication, depicted as a further layer "III", whereby vehicles can exchange information wirelessly with, for example, roadside units with built-in intelligence. A roadside unit is here depicted as "S".

A driverless vehicle (unmanned ground vehicle, UGV) is a vehicle which can be used without a driver. There are two types of driverless ground vehicles, those which are remote-controlled and those which are autonomous.

A remote-controlled UGV is a vehicle which is regulated by a human operator via a communication link. Each control action is determined by the operator either on the basis of direct visual observation or by using sensors such as digital video cameras.

An autonomous vehicle is substantially an autonomous robot which functions without needing to be controlled by a human. Such a vehicle uses its sensors to gain a kind of limited understanding of the surroundings which is then used by regulating algorithms to determine the next control action for the purposes of the overall assignment set for the vehicle by an operator.

Autonomous vehicles have inter alia been developed for potential use in dangerous environments, e.g. in the military and defence industry and the mining industry, both above and below ground. Any people or ordinary manually controlled vehicles approaching the area where autonomous vehicles operate will normally cause interruption of the operation of the autonomous vehicles for safety reasons. When their operating area becomes clear again, the autonomous vehicles may be ordered to resume operating.

Autonomous vehicle thus means here a vehicle capable of navigating and manoeuvring without human control. It uses information about the road, the surroundings and other conditions which affect the route ahead, with a view to automatically regulating the power mobilised, the braking and the steering. Accurate assessment and identification of the planned route ahead is necessary for assessing whether a road is negotiable and for being able to successfully replace human judgement in operating the vehicle.
Road conditions may be complex and in normal running of a vehicle the driver will make hundreds of observations per minute and adjust the operation of the vehicle on the basis of the road conditions perceived. One aspect of assessing road conditions is perceiving the road and its surroundings and finding a feasible way past any objects which may be on the road. Using an autonomous system to replace human perception entails inter alia being able accurately to perceive objects to make it effectively possible to regulate the vehicle so that it is directed past them. But autonomous vehicles have no driver to assess whether there is slipperiness, so it is advantageous if there are systems for being able to decide when a skid protection system needs to be activated, not only at the time but also as a precautionary measure.

The technical methods used for identifying an object close to a vehicle comprise inter alia using one or more cameras and radar to create images of the surroundings. Laser techniques are also used, both scanning lasers and fixed lasers, to identify objects and measure distances. These techniques are often called LIDAR (light detection and ranging) or LADAR (laser detection and ranging). In addition, various sensors on board the vehicle are used inter alia to detect its speed and accelerations in different directions.

In one embodiment the friction monitoring system is fitted in an autonomous vehicle. The autonomous vehicle is then provided with a communication module suited to conducting V2V or V2I communication.

The present invention will now be described in detail with reference to the block diagram in Figure 2.
The invention relates to a friction monitoring system 2 for vehicles 4, 16 which comprises a slipperiness detection device 6 suited to making measurements of at least one parameter related to slipperiness of a roadway close to a first vehicle 4, to determining at least one friction value on the basis of the measurement and to generating a friction signal 8 comprising said friction value determined. First vehicle 4 means for example a vehicle in a vehicle train but not necessarily the vehicle furthest forward in the train.

In one embodiment the slipperiness detection device 6 comprises optical means. The friction of the roadway is for example determined by directing a beam of light towards the roadway and analysing the light reflected. The aforesaid EP2402737 cites an example of such a measurement.

In another embodiment the slipperiness detection device 6 comprises means for analysing the speeds of the wheels of the first vehicle 4. A measure of the friction on the roadway can be arrived at by determining the speeds of wheels on the same axle and analysing the difference between them. The detection may also be by measuring the magnitude of tractive or braking forces required for travelling on the running surface.

In a further embodiment the slipperiness detection device 6 comprises means for analysing a steering torque for the front wheels of the first vehicle 4 and comparing it with threshold values such that lower torque means lower friction, i.e. a more slippery roadway.

The friction monitoring system 2 further comprises a processing device 10 adapted to receiving the friction signal 8 and generating a slipperiness information signal 12 which comprises said friction value.

The friction monitoring system 2 also comprises a first communication device 14 situated in the first vehicle 4 and adapted to receiving the slipperiness information signal 12 and to transmitting a processed slipperiness information signal 15 wirelessly in a format such that one or more other preferably following vehicles 16 can receive the processed signal 15, process it and, where necessary, activate at least one skid protection system 17 in said other vehicle on the basis of the information contained in the processed signal 15 received. In the other vehicle 16 the processed signal 15 is received by a second communication device 18 which then transmits an activation signal to the skid protection system 17. The slipperiness information signal 12 is also arranged to be passed on and, where necessary, to activate at least one skid protection system 22 of the first vehicle 4 in accordance with a set of dynamic activation rules. This set of rules preferably comprises parameters related to nearby vehicles which for example form part of a vehicle train. These parameters may for example refer to the length of the train and the number of vehicles in it. It is thus possible for the first vehicle 4 for example to release means for countering slipperiness, e.g. sand, by covering a stretch of roadway corresponding to the length of the train, which may be advantageous in cases where the train has to come to a halt on an icy roadway. Information about the length of the train is for example available via the communication interface discussed above. The amount of the means used for countering slipperiness may also be varied.

In one embodiment said format for the processed slipperiness information signal 15 is suited to vehicle-to-vehicle transmission. One example is the IEEE standard 802.11 for WLAN (wireless local area networks) called 802.11p which makes it possible to transmit information wirelessly between vehicles, and between vehicles and infrastructures, as mentioned above with respect to Figure 1.

In another embodiment said format for the processed slipperiness information signal 15 is suited to vehicle-to-infrastructure transmission , likewise described above with respect to Figure 1.

To ensure correct determination of the location of the slippery roadway, the friction monitoring system 2 comprises in one embodiment a location determination device 19 adapted to determining the location of the first vehicle, to determining a location value on the basis of the location determined and to generating a location signal 20 on the basis of said location value determined. The location is for example determined by using the GPS system, but also by means of an odometer on board the host vehicle or by using information from other vehicles. The processing device 10 is adapted to receiving said location signal 20 and to generating the slipperiness information signal 12 which will then comprise coordinated friction values and location values. This signal 12 is then conveyed to the first communication device 14, which will process it and send the processed signal 15 off wirelessly in a suitable format described above.

More specifically, in order to achieve coordinated values for friction and location, the processing device 10 is adapted to relating each friction value to a location value so that a specific friction value unambiguously indicates how slippery the roadway is at a given location.

As discussed above, an advantageous embodiment of the friction monitoring system 2 is an application where at least one of said first and second vehicles 4, 16 forms part of a vehicle train. The first vehicle 4 may be at the head of the train and in that case send information about slipperiness out to other vehicles following it in the train. All of the train's vehicles will preferably be equipped with a friction monitoring system according to the present invention. The first vehicle 4 thus need not be the first vehicle in the train but one (or more) of those in the train, and the second vehicle 16 need not follow the first vehicle.

A further advantageous application for autonomous vehicles, particularly for autonomous vehicles in vehicle trains, is where at least one of said first and second vehicles 4, 16 is an autonomous vehicle in a vehicle train.

Examples of suitable skid protection systems comprise those mentioned above, e.g. those with activation of snowchains and distribution of sand. A further possibility is a change in and variation of how tractive forces and/or braking forces are applied to the vehicle's wheels.

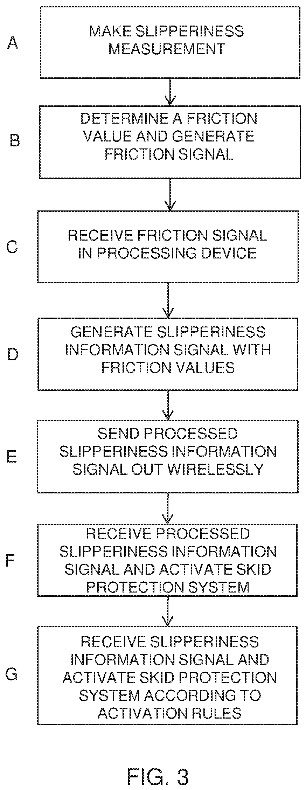

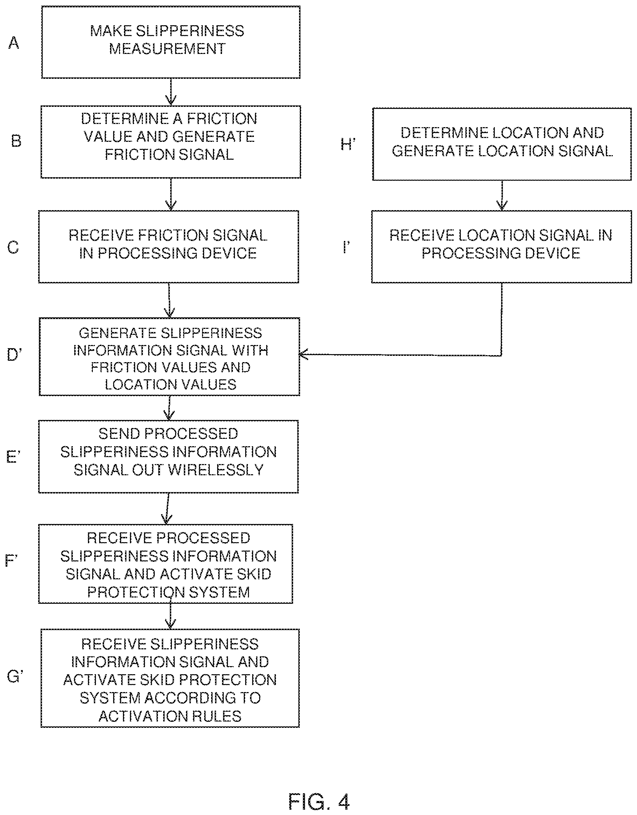

The present invention comprises also a method for a friction monitoring system for vehicles. Figures 3 and 4 are flowcharts illustrating two different embodiments according to the invention.

The method comprises
- making measurements of at least one parameter related to slipperiness of a roadway close to a first vehicle (A),
- determining at least one friction value on the basis of the measurement,
- generating a friction signal comprising said friction value determined (B),
- receiving said friction signal in a processing device (C) and generating a slipperiness information signal comprising said friction value (D),
- receiving said slipperiness information signal in a communication device on board said first vehicle,
- sending a processed slipperiness information signal out wirelessly in a format such that one or more other vehicles can receive the signal (E),
- processing the processed slipperiness information signal received and, where necessary, activating at least one skid protection system of said other vehicle on the basis of the information in the slipperiness information signal received (F), and
- acting upon and, where necessary, activating at least one skid protection system of the first vehicle in accordance with a set of dynamic activation rules (G).
The set of dynamic activation rules preferably comprises parameters related to nearby vehicles which are for example part of a vehicle train. These parameters may for example refer to the length of the train and the number of vehicles in it, and also information related to matters which affect the operability of the vehicles, e.g. weight, type of tyres, number of axles and parameters relating to load transfer between axles.

The embodiment for the method illustrated in the flowchart in Figure 4 comprises
- making measurements of at least one parameter related to slipperiness of a roadway close to a first vehicle (A),
- determining at least one friction value on the basis of the measurement,
- generating a friction signal comprising said friction value determined (B),
- receiving said friction signal in a processing device (C),
- determining the first vehicle's location in a location determination device,
- determining a location value on the basis of the location determined,
- generating a location signal on the basis of said location value determined (H'),
- receiving said location signal in said processing device (I'),
- generating a slipperiness information signal comprising said friction values and location values (D'),
- sending a processed slipperiness information signal out wirelessly in a format such that one or more other vehicles can receive the signal (E'),
- processing the processed slipperiness information signal received and, where necessary, activating at least one skid protection system in said other vehicle on the basis of the information in the slipperiness information signal received (F'), and
- acting upon and, where necessary, activating at least one skid protection system of the first vehicle in accordance with a set of dynamic activation rules (G').

The steps in which the respective friction signal and location signal are determined may of course take place simultaneously.

In one embodiment of the method the processing device is adapted to relating each friction value to a location value so that a specific friction value unambiguously indicates how slippery the roadway is at a given location.

The method is particularly suitable for vehicles in vehicle trains where at least one of said first and second vehicles is part of a vehicle train. One of said first and second vehicles may also be an autonomous vehicle in a vehicle train.

Suitable formats for transmitting the processed slipperiness information signal to other vehicles comprise for example those indicated above which are suited to vehicle-to-vehicle transmission. The processed slipperiness information signal may also be transmitted in formats suited to vehicle-to-infrastructure transmission.

The present invention further comprises a computer programme (P) for vehicles, which programme (P) comprises programme code for causing a processing device 10; 500 or another computer 500 connected to the processing device 10; 500 to perform steps according to the method described above.
The invention also further comprises a computer programme product comprising a programme code stored on a computer-readable medium for performing method steps described above when said programme is run on a processing device 10; 500 or another computer 500 connected to the processing device 10; 500.

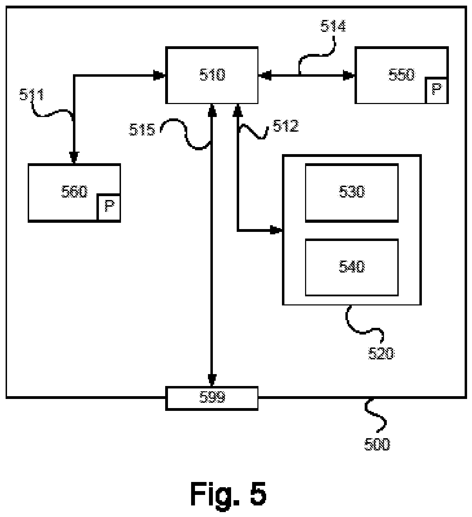

The computer 500 will now be described with reference to the block diagram in Figure 5.

The programme P may be stored in an executable form or in compressed form in a memory 560 and/or a read/write memory 550. Where the data processing unit 510 is described as performing a certain function, it means that it conducts a certain part of the programme stored in the memory 560 or a certain part of the programme stored in the read/write memory 550. The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The units connected to the processing unit 10 (see Figure 2) may be connected to the data port.
When data are received on the data port 599, they are stored temporarily in the second memory element 540. When input data received have been temporarily stored, the data processing unit 510 is prepared to conduct code execution as described above.
Parts of the methods herein described may be conducted by the device 500 (the processing device 10 in Figure 2) by means of the data processing unit 510 which runs the programme stored in the memory 560 or the read/write memory 550. When the device 500 runs the programme, methods herein described are executed.

The present invention is not restricted to the preferred embodiments described above. Various alternatives, modifications and equivalents may be used. The above embodiments are therefore not to be regarded as limiting the invention's protective scope which is defined by the attached claims.

## Claims

1. A friction monitoring system (2) for vehicles (4, 16) which comprises a slipperiness detection device (6) suited to making measurements of at least one parameter related to slipperiness of a roadway close to a first vehicle (4), to determining at least one friction value on the basis of the measurement and to generating a friction signal (8) comprising said friction value determined, a processing device (10) adapted to receiving said friction signal (8) and to generating a slipperiness information signal (12) comprising said friction value, a first communication device (14) situated in said first vehicle (4) and adapted to receiving said slipperiness information signal (12) and to transmitting a processed slipperiness information signal (15) wirelessly in a format such that one or more other vehicles (16) can receive the processed signal (15), process it and, where necessary, activate at least one skid protection system (17) in said other vehicle on the basis of the information in the processed signal received (15), said slipperiness information signal (12) is arranged to be passed on and, where necessary, to activate at least one skid protection system (22) of the first vehicle (4) in accordance with a set of dynamic activation rules **characterised in that** said set of dynamic activation rules comprises parameters related to nearby vehicles.

2. The friction monitoring system (2) according to claim 1, in which said nearby vehicles are part of a vehicle train.

3. The friction monitoring system (2) according to claim 2, in which said parameters comprise the length of the vehicle train.

4. The friction monitoring system (2) according to any one of claims 1-3, which comprises a location determination device (19) adapted to determining the location of the first vehicle, to determining a location value on the basis of the location determined and to generating a location signal (20) on the basis of said location value determined, said processing device (10) being adapted to receiving said location signal (20) and to generating said slipperiness information signal (12) comprising coordinated friction values and location values.

5. The friction monitoring system (2) according to claim 4, in which the processing device (10) is adapted to relating each friction value to a location value so that a specific friction value unambiguously indicates how slippery the roadway is at a given location.

6. The friction monitoring system (2) according to any one of claims 1-5, in which at least one of said first and second vehicles (4,16) is part of a vehicle train.

7. The friction monitoring system (2) according to any one of claims 1-6, in which at least one of said first and second vehicles (4,16) is an autonomous vehicle in a vehicle train.

8. The friction monitoring system (2) according to any one of the foregoing claims, in which said format for the processed slipperiness information signal (15) is suited to vehicle-to-vehicle transmission.

9. The friction monitoring system (2) according to any one of the foregoing claims, in which said format for the processed slipperiness information signal (15) is suited to vehicle-to-infrastructure transmission.

10. A method for a skid protection system for vehicles, which method comprises
- making measurements of at least one parameter related to slipperiness of a roadway close to a first vehicle,
- determining at least one friction value on the basis of the measurement,
- generating a friction signal comprising said friction value determined,
- receiving said friction signal in a processing device and generating a slipperiness information signal comprising said friction value,
- receiving said slipperiness information signal in a communication device in said first vehicle,
- sending a processed slipperiness information signal out wirelessly in a format such that one or more other vehicles can receive the signal,
- processing the processed slipperiness information signal received and, where necessary, activating at least one skid protection system in said other vehicle on the basis of the information in the slipperiness information signal received, and
- acting upon and, where necessary, activating at least one skid protection system of the first vehicle in accordance with a set of dynamic activation rules and **characterised in that** said set of dynamic activation rules comprises parameters related to nearby vehicles.

11. The method according to claim 10, in which said nearby vehicles are part of a vehicle train.

12. The method according to claim 11, in which said parameters comprise the length of the vehicle train.

13. The method according to any one of claims 10-12, comprises
- determining the location of the first vehicle in a location measuring device,
- determining a location value on the basis of the location determined,
- generating a location signal on the basis of said location value,
- receiving said location signal in said processing device,
- generating said slipperiness information signal comprising coordinated friction values and location values.

14. The method according to claim 13, in which the processing device is adapted to relating each friction value to a location value so that a specific friction value unambiguously indicates how slippery the roadway is at a given location.

15. The method according to any one of claims 10-14, in which at least one of said first and second vehicles is part of a vehicle train.

16. The method according to any one of claims 10-15, in which at least one of said first and second vehicles is an autonomous vehicle in a vehicle train.

17. The method according to any one of claims 10-16, in which said format for the processed slipperiness information signal is suited to vehicle-to-vehicle transmission.

18. The method according to any one of claims 10-17, in which said format for the processed slipperiness information signal is suited to vehicle-to-infrastructure transmission.

19. A computer programme (P) for vehicles, which programme (D) comprises programme code for causing a processing device (10; 500) or another computer (500) connected to the processing device (10; 500) to perform steps of the method according to any one of claims 10-18.

20. A computer programme product comprising a programme code stored on a computer-readable medium for performing method steps according to any one of claims 10-18 when said programme code is run on a processing device (10; 500) or another computer (500) connected to the processing device (10; 500).

## Patentansprüche

1. Reibungsüberwachungssystem (2) für Fahrzeuge (4, 16), das eine Glättedetektionsvorrichtung (6), die geeignet ist, um Messungen von mindestens einem Parameter bezüglich der Glätte einer Fahrbahn in der Nähe eines ersten Fahrzeugs (4) vorzunehmen, um mindestens einen Reibungswert auf der Grundlage der Messung zu bestimmen, und um ein Reibungssignal (8) zu generieren, das den bestimmten Reibungswert umfasst, eine Verarbeitungsvorrichtung (10), die angepasst ist, um das Reibungssignal (8) zu empfangen und um ein Glätteinformationssignal (12) zu generieren, das den Reibungswert umfasst, eine erste Kommunikationsvorrichtung (14), die sich in dem ersten Fahrzeug (4) befindet und angepasst ist, um das Glätteinformationssignal (12) zu empfangen und ein verarbeitetes Glätteinformationssignal (15) drahtlos in einem Format zu senden, so dass ein oder mehrere andere Fahrzeuge (16) das verarbeitete Signal (15) empfangen kann bzw. können, um es zu verarbeiten, und um gegebenenfalls mindestens ein Schleuderschutzsystem (17) in dem anderen Fahrzeug auf der Grundlage der Information in dem empfangenen verarbeiteten Signal (15) zu aktivieren, umfasst, wobei das Glätteinformationssignal (12) eingerichtet ist, um weitergegeben zu werden und um gegebenenfalls mindestens ein Schleuderschutzsystem (22) des ersten Fahrzeugs (4) gemäß einem Satz von dynamischen Aktivierungsregeln zu aktivieren, **dadurch gekennzeichnet, dass** der Satz von dynamischen Aktivierungsregeln Parameter über Fahrzeuge in der Nähe umfasst.

2. Reibungsüberwachungssystem (2) nach Anspruch 1, wobei die Fahrzeuge in der Nähe Teil eines Fahrzeugzugs sind.

3. Reibungsüberwachungssystem (2) nach Anspruch 2, wobei die Parameter die Länge des Fahrzeugzugs umfassen.

4. Reibungsüberwachungssystem (2) nach einem der Ansprüche 1 bis 3, das eine Standortbestimmungsvorrichtung (19) umfasst, die angepasst ist, um den Standort des ersten Fahrzeugs zu bestimmen, um einen Standortwert auf der Grundlage des bestimmten Standorts zu bestimmen, und um ein Standortsignal (20) auf der Grundlage des bestimmten Standortwerts zu bestimmen, wobei die Verarbeitungsvorrichtung (10) angepasst ist, um das Standortsignal (20) zu empfangen und um das Glätteinformationssignal (12) zu generieren, das koordinierte Reibungswerte und Standortwerte umfasst.

5. Reibungsüberwachungssystem (2) nach Anspruch 4, wobei die Verarbeitungsvorrichtung (10) angepasst ist, um jeden Reibungswert mit einem Standortwert zu verknüpfen, so dass ein spezifischer Reibungswert eindeutig angibt, wie glatt die Fahrbahn an einem gegebenen Standort ist.

6. Reibungsüberwachungssystem (2) nach einem der Ansprüche 1 bis 5, wobei mindestens eines von den ersten und zweiten Fahrzeugen (4, 16) Teil eines Fahrzeugzugs ist.

7. Reibungsüberwachungssystem (2) nach einem der Ansprüche 1 bis 6, wobei mindestens eines der ersten und zweiten Fahrzeuge (4, 16) ein autonomes Fahrzeug in einem Fahrzeugzug ist.

8. Reibungsüberwachungssystem (2) nach einem der vorhergehenden Ansprüche, wobei das Format für das verarbeitete Glätteinformationssignal (15) zur Fahrzeug-zu-Fahrzeug-Übertragung geeignet ist.

9. Reibungsüberwachungssystem (2) nach einem der vorhergehenden Ansprüche, wobei das Format für das verarbeitete Glätteinformationssignal (15) zur Fahrzeug-zu-Infrastruktur-Übertragung geeignet ist.

10. Verfahren für ein Schleuderschutzsystem für Fahrzeuge, wobei das Verfahren umfasst
- Vornehmen von Messungen mindestens eines Parameters bezüglich der Glätte einer Fahrbahn in der Nähe eines ersten Fahrzeugs,
- Bestimmen mindestens eines Reibungswerts auf der Grundlage der Messung,
- Generieren eines Reibungssignals, das den bestimmten Reibungswert umfasst,
- Empfangen des Reibungssignals in einer Verarbeitungsvorrichtung und Generieren eines Glätteinformationssignals, das den Reibungswert umfasst,
- Empfangen des Glätteinformationssignals in einer Kommunikationsvorrichtung in dem ersten Fahrzeug,
- drahtloses Senden eines verarbeiteten Glätteinformationssignals in einem Format, so dass ein oder mehrere andere Fahrzeuge das Signal empfangen kann bzw. können,
- Verarbeiten des empfangenen verarbeiteten Glätteinformationssignals und gegebenenfalls Aktivieren mindestens eines Schleuderschutzsystems in dem anderen Fahrzeug auf der Grundlage der Information in dem empfangenen Glätteinformationssignal, und
- darauf Reagieren und gegebenenfalls Aktivieren mindestens eines Schleuderschutzsystems des ersten Fahrzeugs gemäß einem Satz von dynamischen Aktivierungsregeln, und
**dadurch gekennzeichnet, dass** der Satz von dynamischen Aktivierungsregeln Parameter über Fahrzeuge in der Nähe umfasst.

11. Verfahren nach Anspruch 10, wobei die Fahrzeuge in der Nähe Teil eines Fahrzeugzugs sind.

12. Verfahren nach Anspruch 11, wobei die Parameter die Länge des Fahrzeugzugs umfassen.

13. Verfahren nach einem der Ansprüche 10 bis 12, umfassend
- Bestimmen des Standorts des ersten Fahrzeugs in einer Standortmessvorrichtung,
- Bestimmen eines Standortwerts auf der Grundlage des bestimmten Standorts,
- Generieren eines Standortsignals auf der Grundlage des Standortwerts,
- Empfangen des Standortsignals in der Verarbeitungsvorrichtung,
- Generieren des Glätteinformationssignals, das koordinierte Reibungswerte und Standortwerte umfasst.

14. Verfahren nach Anspruch 13, wobei die Verarbeitungsvorrichtung angepasst ist, um jeden Reibungswert mit einem Standortwert zu verknüpfen, so dass ein spezifischer Reibungswert eindeutig angibt, wie glatt die Fahrbahn an einem gegebenen Standort ist.

15. Verfahren nach einem der Ansprüche 10 bis 14, wobei mindestens eines der ersten und zweiten Fahrzeuge Teil eines Fahrzeugzugs ist.

16. Verfahren nach einem der Ansprüche 10 bis 15, wobei mindestens eines der ersten und zweiten Fahrzeuge ein autonomes Fahrzeug in einem Fahrzeugzug ist.

17. Verfahren nach einem der Ansprüche 10 bis 16, wobei das Format für das verarbeitete Glätteinformationssignal zur Fahrzeug-zu-Fahrzeug-Übertragung geeignet ist.

18. Verfahren nach einem der Ansprüche 10 bis 17, wobei das Format für das verarbeitete Glätteinformationssignal zur Fahrzeug-zu-Infrastruktur-Übertragung geeignet ist.

19. Computerprogramm (P) für Fahrzeuge, wobei das Programm (D) Programmcode umfasst, um zu bewirken, dass eine Verarbeitungsvorrichtung (10; 500) oder ein anderer Computer (500), der an die Verarbeitungsvorrichtung (10; 500) angeschlossen ist, Schritte des Verfahrens nach einem der Ansprüche 10 bis 18 ausführt.

20. Computerprogrammprodukt, umfassend Programmcode, der auf einem computerlesbaren Medium gespeichert ist, um Verfahrensschritte nach einem der Ansprüche 10 bis 18 auszuführen, wenn der Programmcode auf einer Verarbeitungsvorrichtung (10; 500) oder einem anderen Computer (500), der an die Verarbeitungsvorrichtung (10; 500) angeschlossen ist, abläuft.

## Revendications

1. Système de contrôle de frottement (2) pour véhicules (4, 16), qui comprend un dispositif de détection d'état glissant (6) approprié pour effectuer des mesures d'au moins un paramètre associé à l'état glissant d'une chaussée à proximité d'un premier véhicule (4), pour déterminer au moins une valeur de frottement en fonction de la mesure et pour générer un signal de frottement (8) comprenant ladite valeur de frottement déterminée, un dispositif de traitement (10) adapté à recevoir ledit signal de frottement (8) et à générer un signal d'information d'état glissant (12) comprenant ladite valeur de frottement, un premier dispositif de communication (14) situé dans ledit premier véhicule (4) et adapté à recevoir ledit signal d'information d'état glissant (12) et à transmettre de manière sans fil un signal d'information d'état glissant traité (15) sous un format tel qu'un ou plusieurs autres véhicules (16) puissent recevoir le signal traité (15), à traiter celui-ci, et, si nécessaire, à activer au moins un système de protection contre le dérapage (17) dans ledit autre véhicule en fonction de l'information dans le signal traité reçu (15), ledit signal d'information d'état glissant (12) étant configuré de façon à être transmis à, et, si nécessaire, à activer au moins un système de protection contre le dérapage (22) du premier véhicule (4), conformément à un ensemble de règles dynamiques d'activation, **caractérisé en ce que** ledit ensemble de règles dynamiques d'activation comprend des paramètres associés à des véhicules proches.

2. Système de contrôle de frottement (2) selon la revendication 1, dans lequel lesdits véhicules proches font partie d'un train de véhicules.

3. Système de contrôle de frottement (2) selon la revendication 2, dans lequel lesdits paramètres comprennent la longueur du train de véhicules.

4. Système de contrôle de frottement (2) selon l'une quelconque des revendications 1 à 3, qui comprend un dispositif de détermination de localisation (19) adapté à déterminer la localisation du premier véhicule, à déterminer une valeur de localisation en fonction de la localisation déterminée et à générer un signal de localisation (20) en fonction de ladite valeur de localisation déterminée, ledit dispositif de traitement (10) étant adapté à recevoir ledit signal de localisation (20) et à générer ledit signal d'information d'état glissant (12), comprenant des valeurs de frottement et des valeurs de localisation coordonnées.

5. Système de contrôle de frottement (2) selon la revendication 4, dans lequel le dispositif de traitement (10) est adapté à associer chaque valeur de frottement à une valeur de localisation, de telle sorte qu'une valeur de frottement spécifique indique de façon non ambiguë combien la chaussée est glissante en une localisation donnée.

6. Système de contrôle de frottement (2) selon l'une quelconque des revendications 1 à 5, dans lequel au moins l'un desdits premier et deuxième véhicules (4, 16) fait partie d'un train de véhicules.

7. Système de contrôle de frottement (2) selon l'une quelconque des revendications 1 à 6, dans lequel au moins l'un desdits premier et deuxième véhicules (4, 16) est un véhicule autonome dans un train de véhicules.

8. Système de contrôle de frottement (2) selon l'une quelconque des revendications précédentes, dans lequel ledit format pour le signal d'information d'état glissant traité (15) est approprié pour une transmission de véhicule à véhicule.

9. Système de contrôle de frottement (2) selon l'une quelconque des revendications précédentes, dans lequel ledit format pour le signal d'information d'état glissant traité (15) est approprié pour une transmission de véhicule à infrastructure.

10. Procédé pour un système de protection contre le dérapage pour véhicules, ce procédé comprenant :
- la réalisation de mesures d'au moins un paramètre associé à l'état glissant d'une chaussée à proximité d'un premier véhicule,
- la détermination d'au moins une valeur de frottement en fonction de la mesure,
- la génération d'un signal de frottement comprenant ladite valeur de frottement déterminée,
- la réception dudit signal de frottement dans un dispositif de traitement et la génération d'un signal d'information d'état glissant comprenant ladite valeur de frottement,
- la réception dudit signal d'information d'état glissant dans un dispositif de communication dans ledit premier véhicule,
- l'envoi de manière sans fil d'un signal d'information d'état glissant traité sous un format tel qu'un ou plusieurs autres véhicules puissent recevoir le signal,
- le traitement du signal d'information d'état glissant traité reçu, et, si nécessaire, l'activation d'au moins un système de protection contre le dérapage dans ledit autre véhicule en fonction de l'information dans le signal d'information d'état glissant reçu, et
- le fait d'agir sur, et, si nécessaire, d'activer au moins un système de protection contre le dérapage du premier véhicule, conformément à un ensemble de règles dynamiques d'activation, et **caractérisé en ce que** ledit ensemble de règles dynamiques d'activation comprend des paramètres associés à des véhicules proches.

11. Procédé selon la revendication 10, dans lequel lesdits véhicules proches font partie d'un train de véhicules.

12. Procédé selon la revendication 11, dans lequel lesdits paramètres comprennent la longueur du train de véhicules.

13. Procédé selon l'une quelconque des revendications 10 à 12, comprenant :
- la détermination de la localisation du premier véhicule dans un dispositif de mesure de localisation,
- la détermination d'une valeur de localisation en fonction de la localisation déterminée,
- la génération d'un signal de localisation en fonction de ladite valeur de localisation,
- la réception dudit signal de localisation dans ledit dispositif de traitement,
- la génération dudit signal d'information d'état glissant, comprenant des valeurs de frottement et des valeurs de localisation coordonnées.

14. Procédé selon la revendication 13, dans lequel le dispositif de traitement est adapté à associer chaque valeur de frottement à une valeur de localisation, de telle sorte qu'une valeur de frottement spécifique indique de façon non ambiguë combien la chaussée est glissante en une localisation donnée.

15. Procédé selon l'une quelconque des revendications 10 à 14, dans lequel au moins l'un desdits premier et deuxième véhicules fait partie d'un train de véhicules.

16. Procédé selon l'une quelconque des revendications 10 à 15, dans lequel au moins l'un desdits premier et deuxième véhicules est un véhicule autonome dans un train de véhicules.

17. Procédé selon l'une quelconque des revendications 10 à 16, dans lequel ledit format pour le signal d'information d'état glissant traité est approprié pour une transmission de véhicule à véhicule.

18. Procédé selon l'une quelconque des revendications 10 à 17, dans lequel ledit format pour le signal d'information d'état glissant traité est approprié pour une transmission de véhicule à infrastructure.

19. Programme informatique (P) pour véhicules, ce programme (P) comprenant un code de programme pour faire exécuter par un dispositif de traitement (10 ; 500) ou un autre ordinateur (500) connecté au dispositif de traitement (10 ; 500) des étapes du procédé selon l'une quelconque des revendications 10 à 18.

20. Produit de programme informatique comprenant un code de programme mémorisé sur un support lisible par ordinateur pour exécuter des étapes de procédé selon l'une quelconque des revendications 10 à 18 lorsque ledit code de programme est exécuté sur un dispositif de traitement (10 ; 500) ou un autre ordinateur (500) connecté au dispositif de traitement (10 ; 500).
